# EUROPÄISCHE PATENTANMELDUNG

(11) **EP 0 993 992 A1**
(43) Veröffentlichungstag der Anmeldung: **19.04.2000**
(21) Anmeldenummer: 99118141.3
(22) Anmeldetag: 11.09.1999
(51) Int. Cl.: B60R 13/02, B60R 11/00, B60N 3/02

(54) **B-Säulen-Dachmodul**

(30) Priorität: 15.10.1998 DE 19847496
(71) Anmelder: DaimlerChrysler AG, 70567 Stuttgart (DE)
(72) Erfinder: Weber, Norbert, 71149 Bondorf (DE)

(57) **Zusammenfassung**

Die Erfindung betrifft ein B-Säulen-Dachmodul mit Befestigungsstellen für Fahrzeuginnenraumausstattungsteile (3 bis 5), wie Haltegriffe, Leuchten, etc.

Gemäß der Erfindung weist das B-Säulen-Dachmodul (1) einen länglichen Grundkörper (2) auf, der sich im eingebauten Zustand von dem dachseitigen Ende einer B-Säule (6) quer zu dieser an einem Dachrahmen (3) erstreckt. Zudem sind die Fahrzeuginnenraumausstattungsteile (3 bis 5) funktional in das Dachmodul (1) integriert.

## Beschreibung

Die Erfindung betrifft ein B-Säulen-Dachmodul mit Befestigungsstellen für Fahrzeuginnenraumausstattungsteile, wie Haltegriffe, Leuchten etc.

Aus der DE 38 20 845 C2 ist eine Montageeinheit für Fahrzeugdächer mit einem Fertighimmel und einem Rahmen bekannt. An dem Rahmen sind Befestigungsstellen für Fahrzeuginnenraumausstattungsteile, wie Sonnenblenden, Haltegriffe und Leuchten vorgesehen. Bevor die Fahrzeuginnenraumausstattungsteile an dem Rahmen befestigt werden, wird der Fahrzeughimmel an dem Rahmen angebracht. Im Fahrzeughimmel sind Öffnungen für die Fahrzeuginnenraumausstattungsteile vorgesehen.

Bei der bekannten Montageeinheit hat es sich als nachteilig erwiesen, dass zuerst der Fertighimmel und erst im Anschluss daran die Fahrzeuginnenraumausstattungsteile befestigt werden können. Außerdem ist eine solche komplette Montageeinheit jeweils nur für einen Fahrzeugtyp verwendbar.

Aus der DE 40 05 884 C2 ist eine Montageaufnahme zur Verwendung bei der Montage von Fertighimmeln bekannt. Die bekannte Montageaufnahme ist mit Aufnahmeelementen zum Aufnehmen und Vorpositionieren des durch Fensteröffnungen in die Karosserie einzubringenden Fertighimmels sowie von Zusatzbauteilen, wie Haltegriffen, Sonnenblenden und dergleichen und/oder von Befestigungsteilen versehen. Zur Verwendung ein- und derselben Montageaufnahme für unterschiedliche Fertighimmelvarianten, insbesondere für Fertighimmel mit und ohne verschließbare Dachöffnung, ist mindestens ein Teil der Aufnahmeelemente wahlweise in eine der Montage einer der Fertighimmelvarianten angepasste Arbeitsstellung verstellbar.

Die bekannte Montageaufnahme hat den Nachteil, dass sie aufwendig und kompliziert zu handhaben ist. Außerdem muss die Montageaufnahme nach dem Einbau des Fertighimmels und der Fahrzeuginnenraumausstattungsteile wieder entfernt werden.

Aus der EP 0 170 086 B1 ist eine Vorrichtung zum Einbau eines Dachhimmels nebst anderer, von innen am Dach zu befestigender Teile, wie Sonnenblenden, Halzegriffe und dergleichen mehr, in einer Karosserie von Kraftfahrzeugen bekannt. Bei der bekannten Vorrichtung wird ein Montagegestell mit Aufnahme- und Lösevorrichtungen für den in die Karosserie einzubauenden Dachhimmel derart vormontiert, dass der Dachhimmel seiner späteren Endmontageposition auf dem Montagegestell entspricht. Außer dem Dachhimmel werden auch die anderen innen am Dach zu befestigenden Teile entsprechend ihrer späteren Endmontageposition auf dem Montagegestell vormontiert. Das Montagegestell weist an mindestens zwei gegenüberliegenden Seitenkante Halteelemente auf, die zugleich als Zentriervorrichtung für die Montageeinheit am Dach im Inneren der Karosserie dienen. Nach dem Einbau des Dachhimmels und der zu befestigenden Teile wird das Montagegestell anschließend mittels einer Bewegungseinrichtung abgesenkt und schließlich aus der Karosserie herausgefahren.

Diese Vorrichtung ist, wie die vorab beschriebene Montageaufnahme, aufwendig und kompliziert zu handhaben. Außerdem muss sie ebenfalls nach dem Einbau des Dachhimmels und der zu befestigenden Teile entfernt werden.

Aus der DE 90 01 106 U1 ist eine Halterung für ein audioelektronisches Gerät in einem Kraftfahrzeug bekannt. Die bekannte Halterung umfasst ein bügelartiges, der oberen Breite der vorderen Windschutzscheibe eines Kraftfahrzeuges entsprechendes Kunststoffpressteil mit Befestigungselementen an der Karosserieinnenseite und mit einer in der Mitte in einer Aussparung vorgesehenen Ablage- und ggf. Befestigungsfläche für das Gerät sowie mit einem nach unten verlaufenden, breiten Flansch, der eine Aussparung oder Öffnung für die Rückspiegelhalterung aufweist. Außerdem sind am Ende der Arme des bügelartigen Kunststoffpressteils Ausformungen mit Aussparungen für die Halterungen der Sonnenblenden vorgesehen.

Außerdem ist aus der DE 1 282 494 ein Kopfschutz für Kraftfahrzeuginsassen bekannt. Der bekannte Kopfschutz besteht aus einem unterhalb des vorderen Dachabschnittes im Bereich der Oberkante der Windschutzscheibe quer zu dem Fahrzeug verlaufenden, plastisch deformierbaren Körper. Dabei findet ein im Wesentlichen etwa halbschalenförmig ausgebildeter, zur Aufnahme von Verformungsenergie deformierbarer Körper Verwendung, der nur mit seinen vorderen und/oder seitlichen Teilen am Fahrzeugdach vorzugsweise leicht lösbar befestigt ist. Am Boden des deformierbaren Körpers sind der Rückspiegel und Sonnenblenden angelenkt.

Aus der DE 43 09 492 C1 ist eine Dachinnenkonsole für Kraftfahrzeuge bekannt, die aus einem Kunststoffformteil mit einem Randwulst besteht und nachträglich anbaubar ist. Innerhalb des Randwulstes sind im abgesenkten Mittelbereich in Ausschnitten und Öffnungen Geräte, Schalter, Leuchten, Lautsprecher und dergleichen angeordnet. Außerdem weist die Dachinnenkonsole quer verlaufende Wülste auf, die mehrere kleinformatigere Vertiefungen für Funktionsgruppen bilden. Die Vertiefungen sind mit Ausschnitten zur Aufnahme von Trägerplatten für die Geräte, Schalter, Leuchten und dergleichen versehen.

Ferner ist aus der DE 1 289 755 ein Schläfenschutz zur Erhöhung der inneren Sicherheit eines aus einem geschlossenen Fahrzeugaufbau bestehenden Fahrgastraumes, insbesondere von Personenkraftwagen, bekannt. Dabei ist im Bereich der Oberkante der Seitenscheibe bzw. der Türausschnitte eine sich im Wesentlichen von der Frontscheibe bis zur Heckscheibe erstreckende Schiene angebracht, die an der Karosserie oder einem seitlichen Dachträger mit Abstand zu der Seitenwand mittels Deformationsgliedern befestigt ist. Zur Bildung eines Griffes kann die Schiene mit einer Aussparung versehen sein. Außerdem kann die Schiene als Träger zusätzlicher Einrichtungen, z. B. Beleuchtungseinrichtungen für den Fahrgastraum ausgebildet sein.

Aufgabe der Erfindung ist es, ein B-Säulen-Dachmodul bereitzustellen, das in einfacher Art und Weise vormontierbar und für verschiedene Fahrzeugtypen verwendbar ist.

Die Aufgabe ist bei einem B-Säulen-Dachmodul mit Befestigungsstellen für Fahrzeuginnenraumausstattungsteile, wie Haltegriffe, Leuchten etc., dadurch gelöst, dass das B-Säulen-Dachmodul einen länglichen Grundkörper aufweist, der sich im eingebauten Zustand von dem dachseitigen Ende einer B-Säule quer zu dieser an einem Dachrahmen erstreckt, und dass die Fahrzeuginnenraumausstattungsteile funktional in das Dachmodul integriert sind. Durch die Integration der Fahrzeuginnenraumausstattungsteile in das Dachmodul entfällt das Entfernen der bekannten Montageaufnahmen. Die Fahrzeuginnenraumausstattungsteile können vor dem Einbau des B-Säulen-Dachmoduls endgültig an diesem befestigt werden. Ein derartig vormontiertes B-Säulen-Dachmodul kann kostengünstig bei einem Systemlieferanten gefertigt und "just in time" angeliefert werden. Weil sich das erfindungsgemäße B-Säulen-Dachmodul nur im Bereich der B-Säule an dem Dachrahmen erstreckt, kann ein und dasselbe Modul für verschiedene Fahrzeugtypen, wie Limousine und Kombi, verwendet werden.

Eine besondere Ausführungsart der Erfindung ist dadurch gekennzeichnet, dass die B-Säulen-Blenden in das Dachmodul integriert sind. Dadurch wird der Übergang von den B-Säulen-Blenden zum Fahrzeughimmel mehr in den Dachbereich hinein verlegt. Das Dachmodul bildet einen optisch ansprechenden Abschluss für den Fahrzeughimmel.

Eine weitere besondere Ausführungsart der Erfindung ist dadurch gekennzeichnet, dass der Querschnitt des Dachmoduls an die Form einer Mulde in dem Fahrzeugdach angepasst ist. Dadurch wird erreicht, dass das Dachmodul die Mulde in dem Fahrzeugdach ausfüllt. Das hat den Vorteil, dass der optische Eindruck verbessert wird. Außerdem wird verhindert, dass sich in der Mulde Schmutz ablagert, der dort nur schwierig entfernt werden kann.

Eine weitere besondere Ausführungsart der Erfindung ist dadurch gekennzeichnet, dass ein Luftkanal in das Dachmodul integriert ist. Durch den Luftkanal kann Luft von außen in den Fahrzeuginnenraum eingeleitet werden. Ein unangenehmes "Herabfallen" der Luft auf die Fahrzeuginsassen wird verhindert.

Eine weitere besondere Ausführungsart der Erfindung ist dadurch gekennzeichnet, dass eine Crash-Box in das Dachmodul integriert ist. Die sogenannte Crash-Box dient dazu, im Falle eines Unfalls die insbesondere auf den Kopf der Fahrzeuginsassen wirkenden Kräfte zu vermindern. Dieser Aspekt ist insbesondere im Hinblick auf zukünftige Sicherheitsrichtlinien interessant.

Eine weitere besondere Ausführungsart der Erfindung ist dadurch gekennzeichnet, dass das Dachmodul auf der vom Fahrzeuginnenraum abgewandten Seite Mittel zum Befestigen des Dachmoduls an dem Fahrzeugdach aufweist. Die Befestigung des Dachmoduls an dem Fahrzeugdach erfolgt praktischerweise mit Schnappverbindungselementen. Alternativ können Schraubverbindungen eingesetzt werden. Selbstverständlich kann das Dachmodul auch mit Hilfe einer Klebverbindung an dem Fahrzeugdach bzw. dem Dachrahmen befestigt werden.

Eine weitere besondere Ausführungsart der Erfindung ist dadurch gekennzeichnet, dass das Dachmodul aus einem leicht deformierbaren Material gebildet ist. Dadurch wird die Verletzungsgefahr im Inneren des Fahrzeuges verringert.

Bei einem Kraftfahrzeug mit einem Fahrzeugdach, einem Dachmodul der vorab beschriebenen Art und einem Fahrzeughimmel ist die o. a. Aufgabe dadurch gelöst, dass der Fahrzeughimmel zwischen dem Fahrzeugdach und dem Dachmodul angeordnet ist. Die Befestigung des Fahrzeughimmels kann mit den gleichen Befestigungsmitteln realsiert werden, die auch zum Befestigen des Dachmoduls an dem Fahrzeugdach verwendet werden. Die Befestigung des Fahrzeughimmels kann auch nur durch das B-Säulen-Dachmodul, durch Pressen desselben gegen das Fahrzeugdach, erfolgen. Durch die Materialdopplung beim Aufsetzen des Moduls auf den Himmel ergibt sich ein zusätzlicher Schutz.

Weitere Vorteile, Merkmale und Einzelheiten der Erfindung ergeben sich aus der nachfolgenden Beschreibung, in der unter Bezugnahme auf die Zeichnung verschiedene Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. In der Zeichnung zeigt:
- Figur 1: eine erste Ausführungsform eines erfindungsgemäßen B-Säulen-Dachmoduls im eingebauten Zustand;
- Figur 2: eine zweite Ausführungsform eines erfindungsgemäßen B-Säulen-Dachmoduls im eingebauten Zustand; und
- Figuren 3 bis 6: vergrößerte Ansichten eines Schnitts entlang der Linie A-B in Fig. 1 gemäß vier verschiedenen Ausführungsformen der vorliegenden Erfindung.

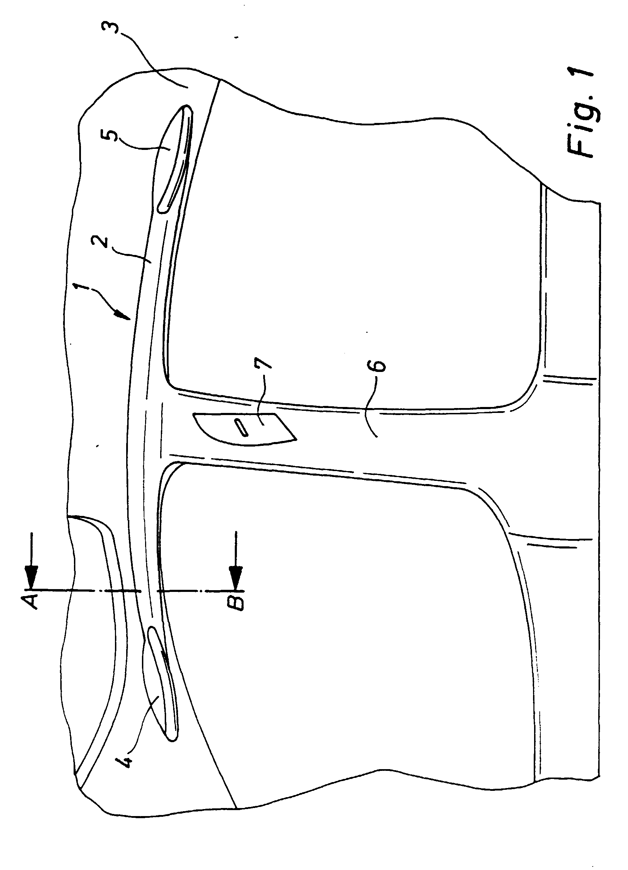

In Fig. 1 ist ein B-Säulen-Dachmodul gemäß der vorliegenden Erfindung insgesamt mit 1 bezeichnet. Das B-Säulen-Dachmodul 1 umfasst einen länglichen Grundkörper 2. Der längliche Grundkörper 2 ist an einem Dachrahmen 3 eines Kraftfahrzeuges befestigt. An den Enden des länglichen Grundkörpers 2 sind Haltegriffe 4 und 5 ausgebildet.

Wie man in Fig. 1 sieht, ist die B-Säulen-Blende 6 in das B-Säulen-Dachmodul 1 integriert. Dadurch bekommt das B-Säulen-Dachmodul 1 eine insgesamt T-förmige Gestalt. Bei 7 ist angedeutet, dass bspw. eine Halterung für einen Sicherheitsgurt in das B-Säulen-Dachmodul 1 integriert sein kann.

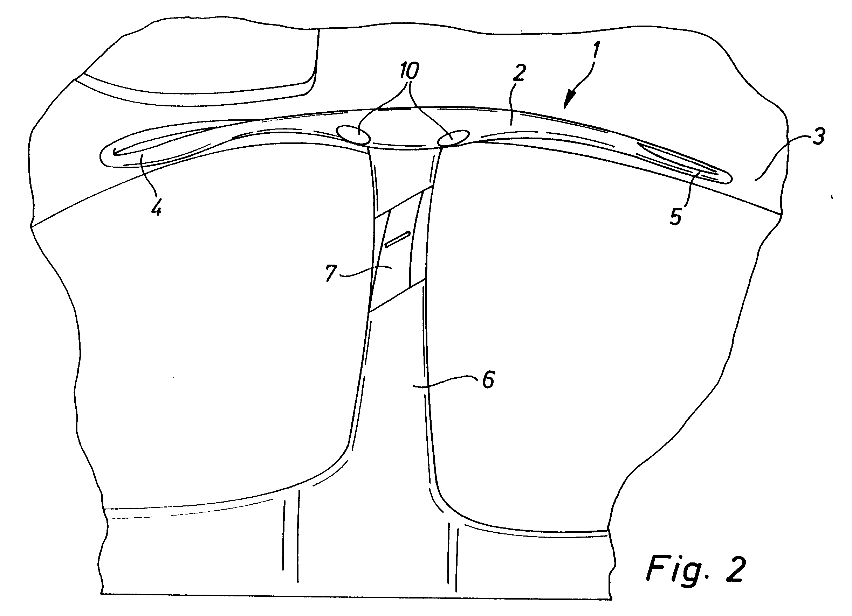

In Fig. 2 ist eine zweite Ausführungsform eines erfindungsgemäßen B-Säulen-Dachmoduls 1 dargestellt. Der Einfachheit halber sind gleiche Teile wie in Fig. 1 mit gleichen Bezugszeichen versehen. Im Unterschied zu der in Fig. 1 dargestellten Auführungsform ist der längliche Grundkörper 2 bei der in Fig. 2 dargestellten Ausführungsform nicht einstückig mit der B-Säulen-Blende 6. Darüber hinaus sind in dem länglichen Grundkörper 2 zwei Leuchten 10 angebracht. Ansonsten sind die in den Fig. 1 und 2 dargestellten Ausführungsformen im Wesentlichen gleich gestaltet. Der längliche Grundkörper 2 ist jedoch bei der in Fig. 2 dargestellten Ausführungsform mit einer etwas stärkeren Krümmung versehen als bei der in Fig. 1 dargestellten Ausführungsform.

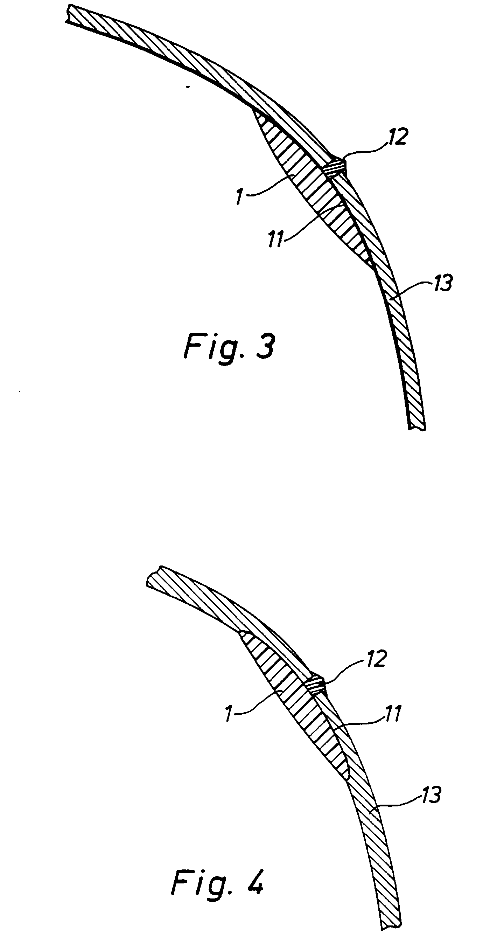

Bei der in Fig. 3 dargestellten Schnittansicht sieht man, dass das B-Säulen-Dachmodul 1 in einer Mulde 11 eines Fahrzeughimmels 13 angeordnet ist. Die Befestigung des B-Säulen-Dachmoduls 1 erfolgt durch Befestigungselemente 12. Die Befestigungselemente 12 können von Schnapphaken oder Clips gebildet werden, die in dem Dachrahmen 3 verankert sind. Das B-Säulen-Dachmodul 1 besteht aus einem Material mit einem hohen Deformationspotential.

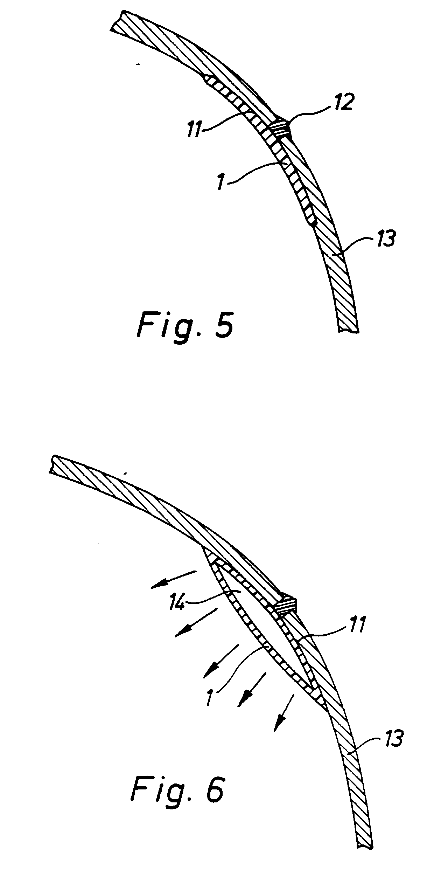

Den Fig. 4 und 5 ist zu entnehmen, dass das B-Säulen-Dachmodul 1 im Querschnitt auf der zum Fahrzeuginnenraum gewandten Seite sowohl konvex als auch konkav ausgebildet sein kann.

Bei der in Fig. 6 dargestellten Ausführungsform ist in dem B-Säulen-Dachmodul 1 ein Luftkanal 14 ausgebildet. Die durch den Luftkanal 14 geförderte Luft kann diffus durch Löcher austreten, die in dem B-Säulen-Dachmodul 1 angebracht sind. Alternativ können Lamellen vorgesehen sein, um ein gezieltes Ausströmen der Luft zu ermöglichen.

## Patentansprüche

1. B-Säulen-Dachmodul mit Befestigungsstellen für Fahrzeuginnenraumausstattungsteile (3 bis 5), wie Haltegriffe, Leuchten, etc., **dadurch gekennzeichnet**, dass das B-Säulen-Dachmodul (1) einen länglichen Grundkörper (2) aufweist, der sich im eingebauten Zustand von dem dachseitigen Ende einer B-Säule (6) quer zu dieser an einem Dachrahmen (3) erstreckt, und dass die Fahrzeuginnenraumausstattungsteile (3 bis 5) funktional in das B-Säulen-Dachmodul (1) integriert sind.

2. Dachmodul nach Anspruch 1, dadurch gekennzeichnet, dass die B-Säulen-Blenden (6) in das Dachmodul (1) integriert sind.

3. Dachmodul nach einem der vorhergehenden Ansprüche, dadurch gekennzeichnet, dass der Querschnitt des Dachmoduls (1) an die Form einer Mulde (11) in dem Fahrzeugdach (3, 13) angepasst ist.

4. Dachmodul nach einem der vorhergehenden Ansprüche, dadurch gekennzeichnet, dass ein Luftkanal (14) in das Dachmodul (1) integriert ist.

5. Dachmodul nach einem der vorhergehenden Ansprüche, dadurch gekennzeichnet, dass eine Crash-Box in das Dachmodul integriert ist.

6. Dachmodul nach einem der vorhergehenden Ansprüche, dadurch gekennzeichnet, dass das Dachmodul (1) auf der vom Fahrzeuginnenraum abgewandten Seite Mittel (12) zum Befestigen des Dachmoduls (1) an dem Fahrzeugdach (3, 13) aufweist.

7. Dachmodul (1) nach einem der vorhergehenden Ansprüche, dadurch gekennzeichnet, dass das Dachmodul aus einem leicht deformierbaren Material gebildet ist.

8. Kraftfahrzeug mit einem Fahrzeugdach, einem Dachmodul nach einem der vorhergehenden Ansprüche und einem Fahrzeughimmel, dadurch gekennzeichnet, dass der Fahrzeughimmel (13) zwischen dem Fahrzeugdach (3) und dem Dachmodul (1) angeordnet ist.
